# EUROPEAN PATENT APPLICATION

(11) **EP 4 325 907 A1**
(43) Date of publication of application: **21.02.2024**
(21) Application number: 22788168.7
(22) Date of filing: 12.04.2022
(51) Int. Cl.: H04W 4/44, H04W 84/12, H04W 88/06, H04W 52/02

(54) **COMMUNICATION DEVICE, COMMUNICATION PROCESSING SYSTEM, AND COMMUNICATION CONTROL METHOD**

(30) Priority: 14.04.2021 JP 2021068622
(71) Applicant: DENSO CORPORATION, Kariya-city, Aichi-pref., 448-8661 (JP)
(72) Inventor: IKUSHIMA Keisuke, Kariya-city, Aichi-pref., 448-8661 (JP)
(74) Representative: Winter, Brandl - Partnerschaft mbB
(86) International application number: PCT/JP2022/017614
(87) International publication number: WO 2022/220245

(57) **Abstract**

When an in-vehicle communication device (1) detects that a subject vehicle is parked, the in-vehicle communication device (1) stores, in a memory, information indicating whether Wi-Fi connection is available at a parking point as a current position, and then shifts to a power saving mode. The power saving mode corresponds to a power supply state in which at least a Wi-Fi communication function is set to OFF while a cellular communication function is maintained. When the in-vehicle communication device (1) receives a message push-distributed from an app server (4) via cellular in the power saving mode in a state where the stored information indicates that the Wi-Fi connection is available, the in-vehicle communication device (1) enables the Wi-Fi communication function and causes an application (21) to execute data communication via Wi-Fi communication.

## Description

### CROSS REFERENCE TO RELATED APPLICATION

This application is based on and claims benefit of Japanese Patent Application No. 2021-068622 filed on April 14, 2021, and all the contents of the application are incorporated by reference.

### TECHNICAL FIELD

The present disclosure relates to a technique for controlling data communication between a communication device used in a vehicle and an application server.

### BACKGROUND

Patent Literature 1 discloses a communication device capable of selectively executing cellular communication, which is wireless communication using a mobile phone network, and Wi-Fi (registered trademark) communication. The communication device switches a communication line in accordance with whether a vehicle has changed to a parking preparation state. Specifically, the cellular communication is selected when the vehicle is not in the parking preparation state, and the communication line used for data communication is switched from the cellular communication to the Wi-Fi communication when the vehicle transitions to the parking preparation state.

The parking preparation state in Patent Literature 1 is assumed to be a state where traveling such as backward movement is still possible, for example, a state where the vehicle speed has changed to a predetermined speed or less, a state where the subject vehicle has reached the vicinity of the home of a user, or a state where the vehicle has reached the vicinity of the destination. Further, a case where the vehicle comes out of the parking preparation state includes a case where a shift lever is set to a drive position. A terminal that is basically assumed to be powered on, such as a smartphone, is mainly assumed as the communication device in Patent Literature 1.

### PRIOR ART LITERATURE

### PATENT LITERATURE

Patent Literature 1: JP 2016-063338 A

### SUMMARY

A communication device disclosed herein is configured to be used for a vehicle as an interface for data communication between at least one in-vehicle device and an information processor present outside the vehicle. The communication device includes: a short-range communication control unit configured to control an operation of a short-range communication unit that is configured to execute short-range communication; a parking detection unit configured to detect that the vehicle is parked based on a signal from an in-vehicle sensor; a short-range communication availability determination unit configured to determine whether the data communication using the short-range communication is available at a point where the parking detection unit detects that the vehicle is parked, and configured to store a determination result in a predetermined memory; and a request receiving unit configured to receive a communication start request from one of the in-vehicle device and the information processor, the communication start request being a message requesting start of the data communication with another of the in-vehicle device and the information processor. The short-range communication control unit is configured to stop the operation of the short-range communication unit based on the parking detection unit detecting that the vehicle is parked. The short-range communication control unit is configured to restart the operation of the short-range communication unit for the data communication between the in-vehicle device and the information processor using the short-range communication when the request receiving unit receives the communication start request in a state where the memory holds data indicating that the vehicle is parked and that the data communication using the short-range communication is available.

According to the above configuration, since the short-range communication unit basically stops while the vehicle is parked, power consumption can be reduced. In addition, after the short-range communication unit is temporarily operated when the communication start request is received, data communication between the in-vehicle device and the information processor is executed using the short-range communication. Therefore, the cellular communication amount can be reduced. That is, the cellular communication amount can be reduced while power consumption during parking is reduced.

A communication processing system disclosed herein includes a communication device configured to be used for a vehicle as an interface for data communication between an in-vehicle device and an information processor present outside the vehicle and a relay server configured to relay communication between the communication device and the information processor. The communication device includes a short-range communication control unit configured to control an operation of a short-range communication unit that is configured to execute short-range communication, a cellular control unit configured to control an operation of a cellular communication unit that is configured to execute cellular communication, a parking detection unit configured to detect that the vehicle is parked based on a signal from an in-vehicle sensor; a short-range communication availability determination unit configured to determine whether the data communication using the short-range communication is available at a point where the parking detection unit detects that the vehicle is parked, and configured to store a determination result in a predetermined memory; a request receiving unit configured to receive a communication start request from one of the in-vehicle device and the information processor, the communication start request being a message requesting start of the data communication with another of the in-vehicle device and the information processor, and a reporting unit configured to transmit the determination result of the short-range communication availability determination unit to the relay server. The short-range communication control unit is configured to stop the operation of the short-range communication unit based on the parking detection unit detecting that the vehicle is parked. The short-range communication control unit is configured to intermittently operate the short-range communication unit at a predetermined polling interval when the cellular communication is unavailable and the data communication using the short-range communication is available at the point where the parking detection unit detects that the vehicle is parked. The relay server is configured to determine whether the cellular communication is unavailable for the communication device and whether the data communication using the short-range communication is available for the communication device on the basis of at least one of a report from the communication device and a result of communication confirmation with the communication device, and change a response to the communication start request from the information processor based on a combination of availability of the cellular communication for the communication device and availability of the data communication using the short-range communication for the communication device.

A communication control method disclosed herein is for executing data communication between at least one in-vehicle device and an information processor present outside a vehicle. The method includes a step of detecting that the vehicle on which the in-vehicle device is mounted is parked based on a signal from an in-vehicle sensor; a step of determining whether the data communication using short-range communication is available at a point where the vehicle is parked, and storing a determination result in a predetermined memory based on detection of the vehicle being parked; a step of receiving a communication start request from one of the in-vehicle device and the information processor, the communication start request being a message requesting start of the data communication with another of the in-vehicle device and the information processor; a step of stopping an operation of a short-range communication unit based on detection of the vehicle being parked, the short-range communication unit being a communication module configured to execute the short-range communication; and a step of restarting the operation of the short-range communication unit for the data communication between the in-vehicle device and the information processor using the short-range communication based on receiving of the communication start request in a state where the memory holds data indicating that the vehicle is parked and that the data communication using the short-range communication is available.

In addition, the reference numerals in parentheses described in the claims simply indicate correspondence to the concrete means described in the embodiments, which is an example of the present disclosure. That is, the technical scope of the present invention is not necessarily limited thereto.

### BRIEF DESCRIPTION OF DRAWINGS

FIG. 1 is a diagram schematically illustrating an overview of a communication processing system.
FIG. 2 is a block diagram illustrating a configuration of an in-vehicle system.
FIG. 3 is a functional block diagram for explaining functions of an in-vehicle communication device and an ECU.
FIG. 4 is a block diagram illustrating a configuration and functions of a relay server.
FIG. 5 is a flowchart for explaining an operation of a controller at the time of parking.
FIG. 6 is a sequence diagram in a case where an app server outputs a communication start request.
FIG. 7 is a sequence diagram in a case where the ECU outputs a communication start request.
FIG. 8 is a sequence diagram illustrating an example of the operation of the controller in a case where a parking point is out of a cellular service area.
FIG. 9 is a diagram illustrating an example of a response mode of the relay server according to a communication state of the in-vehicle communication device in response to a push request from the app server.

### DETAILED DESCRIPTION

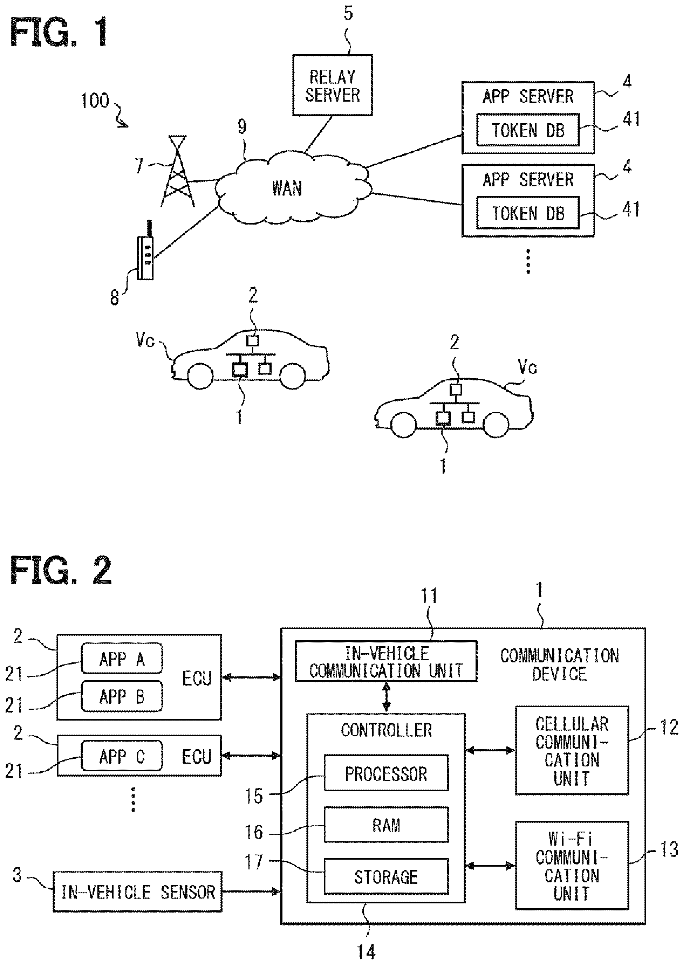

Hereinafter, an embodiment of the present disclosure will be described with reference to the drawings. As shown in FIG. 1, a communication processing system 100 of the present disclosure includes an in-vehicle communication device 1, an ECU 2, an app server 4 and a relay server 5. The in-vehicle communication device 1 and the ECU " are mounted on each vehicle Vc. The app server 4 and the relay server 5 are disposed outside the vehicle. The ECU is an abbreviation for Electronic Control Unit and refers to an electronic control device. The app server is an abbreviation for an application server. Although only two vehicles Vc equipped with the in-vehicle communication device 1 are shown in FIG. 1, there may be three or more vehicles as a whole of the system. The specifications of the ECUs 2 mounted on the respective vehicles Vc may be different. The specifications of the ECUs 2 may include an OS (i.e., operating system) and an activation state when a vehicle power supply (e.g., accessory power supply) is set to OFF.

The in-vehicle communication device 1 is a device used in a vehicle as an interface for the ECU 2 to execute data communication with the app server 4 existing outside the vehicle. The in-vehicle communication device 1 is configured to execute cellular communication, which is wireless communication using a cellular line, and Wi-Fi (registered trademark) communication. The cellular line here indicates a communication line via a cellular base station 7, in other words, a communication line in accordance with the LTE/4G/5G standard. The in-vehicle communication device 1 includes a subscriber identity module (SIM) associated with an arbitrary communication carrier.

The cellular base station 7 is a facility that transmits and receives radio signals in accordance with a standard such as the LTE to and from the in-vehicle communication device 1. The cellular base station 7 is also referred to as an evolved NodeB (eNB). The cellular base station 7 may be a next generation NodeB (gNB) used in 5G. The cellular base station 7 exchanges control signals with the in-vehicle communication device 1, thereby realizing connection to the wide area communication network 9 via the in-vehicle communication device 1, and data communication between the in-vehicle communication device 1 and various servers.

The wide area communication network 9 is, for example, the Internet. The wide area communication network 9 may be a network provided by a communication carrier, such as an Internet Protocol (IP) network, a mobile phone network, or the like except for the Internet. The wide area communication network 9 may be a network to which the app server 4, the relay server 5, the cellular base station 7, and a Wi-Fi base station 8 are connected.

The Wi-Fi communication corresponds to data communication via the Wi-Fi base station 8. The Wi-Fi base station 8 is a communication facility for providing a wireless LAN (wireless local area network) conforming to Wi-Fi. As a Wi-Fi standard, various standards such as IEEE 802.11n, IEEE 802.11ac, and IEEE 802.11ax (so-called Wi-Fi 6) can be adopted. The Wi-Fi base station 8 is disposed as infrastructure facility at an arbitrary location by various service providers. The Wi-Fi according to the present disclosure refers to Wi-Fi available for the in-vehicle communication device 1, such as free Wi-Fi, or Wi-Fi for which a user or a vehicle manufacturer has made a use contract. The in-vehicle communication device 1 can execute Wi-Fi communication when the vehicle Vc is present in a communication area of the Wi-Fi base station 8. The Wi-Fi base station 8 may be referred to as an access point or a router. Although one cellular base station 7 and one Wi-Fi base station 8 are illustrated in FIG. 1, multiple cellular base stations 7 and multiple Wi-Fi base stations 8 may exist.

The in-vehicle communication device 1 is a device that provides the wireless communication function described above. The vehicle Vc is a connected car connectable to the Internet via the in-vehicle communication device 1 mounted on the vehicle Vc. The in-vehicle communication device 1 can also be referred to as a DCM (i.e., Date Communication Module), a TCU (i.e., Telematics Control Unit), or the like. The in-vehicle communication device 1 is accommodated in, for example, an instrument panel. The in-vehicle communication device 1 may be removable by the user. The in-vehicle communication device 1 may be a mobile terminal such as a smartphone brought into a vehicle cabin by the user. The term "in-vehicle" includes a state of being carried into the vehicle cabin. The in-vehicle communication devices 1 used in the vehicles Vc basically have the same configuration, but do not necessarily have to have completely the same specifications. The OS, the number of antennas, the contracted communication carrier, the number of available communication lines, the communication fee plan, and the like may be different. Hereinafter, a subject vehicle corresponds to a vehicle Vc on which the in-vehicle communication device 1, the ECU 2, and an in-vehicle sensor 3 are mounted/used.

As shown in FIG. 2, the in-vehicle communication device 1 is connected to the ECU 2 and the in-vehicle sensor 3 mounted on the subject vehicle. The ECU 2 is a controller mounted on the vehicle Vc. The ECU 2 may be any of an ECU of a body system, an ECU of a vehicle control system, an ECU of an ADAS system or an automatic driving system, and an ECU of an HMI system. For example, the in-vehicle communication device 1 is configured to be able to communicate with each ECU 2 via an in-vehicle network that is a communication network established in the vehicle. Various standards such as Controller Area Network (CAN is a registered trademark) and Ethernet (registered trademark) can be adopted as the standard of the in-vehicle network.

The in-vehicle communication device 1 and the ECU 2 may be configured to be able to directly communicate with each other without going through the in-vehicle network. Only one ECU 2 may be connected to the in-vehicle communication device 1. The in-vehicle communication device 1 may be configured to communicate with other ECUs via a central ECU, which is an ECU that controls the entire vehicle, or a gateway ECU that separates the inside of the vehicle from the outside to ensure security.

The in-vehicle communication device 1 is configured to maintain an online state in which the in-vehicle communication device 1 is connected to the wide area communication network 9 by cellular communication even when a power source for vehicle traveling power is in an OFF state, for example, when the vehicle is in a parked state. The power source for vehicle traveling is an ignition power source in an engine vehicle. In an electric vehicle, a system main relay corresponds to the power source for vehicle traveling. A communication device ID as unique identification information is assigned to each in-vehicle communication device 1. The communication device ID functions as information for identifying the in-vehicle communication device 1 (vehicle Vc). The communication device ID may also be referred to as a DCM-ID or a TCU-ID. Details of the in-vehicle communication device 1 will be described later.

Each ECU 2 is configured as a computer including an arithmetic core such as a CPU (i.e., Central Processing Unit) and a memory such as a RAM (i.e., Random Access Memory). Each ECU 2 executes a program stored in a nonvolatile memory included in the ECU 2, thereby executing processing according to the program. An ECU-ID as an identification number is assigned to each ECU 2. The ECU 2 corresponds to an in-vehicle device.

The ECU 2 is configured to be capable of executing one or more applications 21 (hereinafter, apps 21). The ECU 2 corresponds to an end ECU in the in-vehicle system. The app 21 provides a predetermined service to the user of the vehicle Vc by communicating with the app server 4. An arithmetic core such as a CPU included in the ECU 2 realizes the app 21 by executing predetermined application software. The "application" and "app" according to the present disclosure can be read as a device or an arithmetic core that executes the application. The arithmetic core corresponds to a processor such as a CPU. An app ID, which is identification information unique to each app, is assigned to each app 21.

Each app 21 outputs transmission data to the in-vehicle communication device 1, and the transmission data is addressed to the app server 4 corresponding to the app 21. Each app 21 acquires data from the corresponding app server 4 via the in-vehicle communication device 1. In the communication processing system 100 of the present embodiment, communication between the app server 4 and the app 21 is performed not only via the in-vehicle communication device 1 but also via the relay server 5. Each app 21 outputs a communication start request to the in-vehicle communication device 1 in response to creation of the transmission data to the app server 4. The communication start request corresponds to a message (signal) requesting a start of data communication with a device designated as a destination.

The app 21 includes an encryption processing unit that encrypts the transmission data and decrypts the data encrypted and transmitted from the app server 4. For example, the app 21 has a function of executing encrypted communication using TLS (i.e., Transport Layer Security).

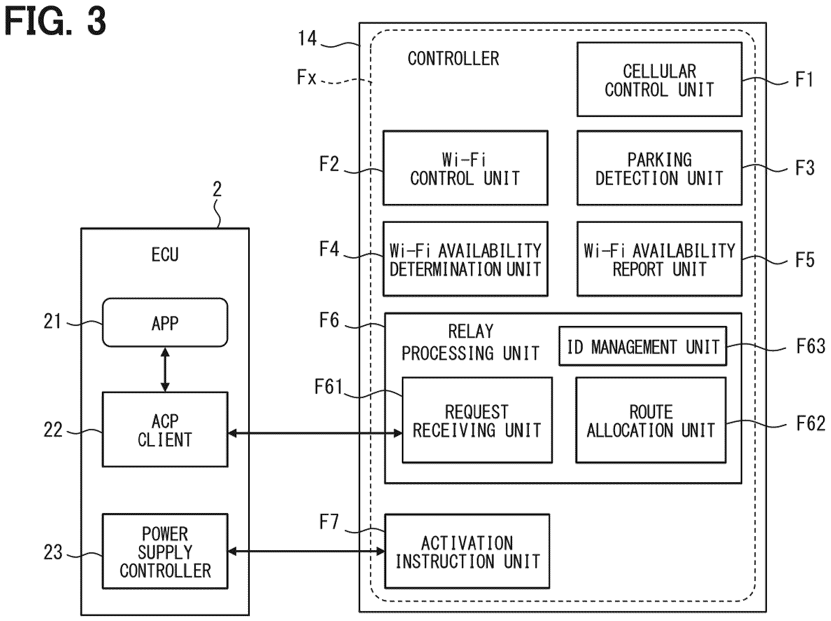

As shown in FIG. 3, the ECU 2 includes an ACP client 22 and a power supply controller 23. The ACP client 22 is configured to mediate communication between the app 21 and the in-vehicle communication device 1. The ACP client 22 can also be referred to as an in-vehicle relay module. The ACP client 22 may be disposed for each app 21 or each ECU 2. Hardware such as a CPU implements the ACP client 22 by executing ACP client software which is predetermined software. The ACP client 22 transmits the communication start request from the app 21 to the in-vehicle communication device 1, and transmits a response from the in-vehicle communication device 1 to the app 21 in response to the communication start request.

The ACP client 22 notifies the in-vehicle communication device 1 of the app ID and the ECU-ID periodically or when the predetermined event occurs. Accordingly, the in-vehicle communication device 1 can specify the app 21 and the ECU 2 including the app 21. The notification of the various IDs may be performed, for example, at a timing when the power source for vehicle traveling is turned on or at a predetermined time.

The function of the ACP client 22 may be included in the app 21. The ACP client 22 may be configured as a part of the app 21. In addition, the ACP client 22 may be configured as hardware. The encryption processing unit of the app 21 may be included in the ACP client 22. A functional arrangement of each configuration can be appropriately changed. When the ECU2 includes multiple apps 21, the ACP client 22 of the ECU2 can manage the app ID and the activation state of each app 21.

The power supply controller 23 switches the ON/OFF state of the power supply of the ECU2 based on an instruction signal from the in-vehicle communication device 1. For example, the power supply controller 23 switches the power supply of the ECU 2 from the OFF state to the ON state based on an input of an activation request signal from the in-vehicle communication device 1. Unlike the in-vehicle communication device 1, when the power source for traveling of the vehicle Vc is in an OFF state, the ECU 2 is in a state in which data communication with the app server 4 is basically impossible in order to reduce power consumption. For example, when the power source for vehicle traveling is set to the OFF state, the ECU 2 shifts to a power supply OFF state in which power supply to components other than the power supply controller 23 is stopped.

The ECU 2 may be configured to be set to a sleep state or a hibernation state as the power supply state in addition to the ON and OFF states. The sleep state corresponding to a state in which power supply to an arithmetic core or the like is stopped while using data, i.e., an execution state of a program is stored in a volatile memory such as a RAM. The hibernation state corresponds to a state in which the power supply to the arithmetic core or the like is stopped while the execution state of the program is stored in a writable nonvolatile memory such as a flash memory. The above-described OFF state of the power supply may be, for example, the hibernation state or the sleep state. The power supply controller 23 may be implemented as one function of the ACP client 22. That is, the power supply controller 23 may be integrated with the ACP client 22.

The in-vehicle sensor 3 is a sensor that detects a predetermined item related to the state of the vehicle Vc. Examples of the in-vehicle sensor 3 include a shift position sensor that detects a shift position, and a vehicle speed sensor that detects a vehicle speed. The in-vehicle sensor 3 also may include a sensor/switch that detects an operating state of a parking brake, and a sensor/switch that detects the power supply state of the vehicle. The in-vehicle sensor 3 also may include a GNSS (i.e., Global Navigation Satellite System) receiver as a sensor that detects the position of the subject vehicle. The GNSS may be the GPS, the GLONASS, the Galileo, the IRNSS, the QZSS, or the Beidou. Information such as the state of the vehicle power supply detected by the in-vehicle sensor 3, the shift position, and the operating state of the parking brake may be input to the in-vehicle communication device 1 via the ECU 2. That is, one or more ECUs 2 may be interposed between the in-vehicle sensor 3 and the in-vehicle communication device 1.

Each app server 4 is a facility that provides a predetermined service in cooperation with the app 21 used in the vehicle Vc. The app server 4 executes predetermined processing on data received from the app 21 used in the vehicle Vc. The app server 4 is a substantial communication partner of the ECU 2 and the app 21. The app server 4 corresponds to an information processor. The app server 4 transmits and receives data corresponding to the provided service to and from the app 21. The app server 4 is configured to actively (spontaneously) transmit a message to a certain app 21 used in a certain vehicle Vc as push transmission. The push transmission can be understood as a message transmission to the app 21 that is stopped or running in the background, in other words, the app 21 that is not in communication with the app server 4. The push transmission is executed using a token. The token is information acting as a search key for uniquely identifying a destination of a message or a transmission source of a received message. The token is issued by the relay server 5. Details of the token will be described later.

When executing the push transmission to the certain app 21 mounted on the certain vehicle Vc, the app server 4 transmits a push request to the relay server 5. The push request is a signal requesting the push transmission to the in-vehicle communication device 1. The push request includes a message body and at least one of the app ID and the token as destination information. In the present embodiment, the token is mainly used as the destination information. The app server 4 includes a token database 41 that stores data indicating a correspondence relationship between the token for identifying the destination and the vehicle Vc. The app server 4 reads the token associated with the transmission target of the message from the token database 41. Then, the app server 4 transmits the message to which the read token is added to the relay server 5 as the push request. DB in FIG. 1 is an abbreviation for a database.

The push request issued by the app server 4 mainly corresponds to a communication start request that is a message requesting a start of communication with a certain ECU 2 (app 21). The message pushed from the app server 4 may be, for example, a command instructing execution of predetermined vehicle control such as starting of an air conditioner or locking of a door. However, even if the message pushed from the app server 4 is the vehicle control command, the app 21 finally executes data communication with the app server 4 to report the control result. Therefore, a command for executing a predetermined vehicle control is also included in the concept of the message for starting data communication (that is, communication start request).

The communication between the app server 4 and the app 21 is encrypted. Various methods can be adopted as an encrypted communication method. For example, the app server 4 and the app 21 are configured to execute TLS encrypted communication. Here, as an example, not only the app 21 and the app server 4 but also other devices such as the relay server 5 and the in-vehicle communication device 1 are configured to execute the TLS communication.

The relay server 5 is a server that relays communication between the vehicle Vc and the app server 4. The relay server 5 integrally executes a connection control of communication between the vehicle Vc and the app server 4 and monitoring of a state of the communication. When the in-vehicle communication device 1 is connected to the wide area communication network 9 via cellular communication or Wi-Fi communication, the relay server 5 can communicate with the in-vehicle communication device 1 via the wide area communication network 9. The relay server 5 transmits data to the ECU 2 mounted on the designated vehicle Vc and acquires data from the vehicle Vc based on a request from the app server 4.

The relay server 5 corresponds to a server that provides a cloud-side main function in an automotive wireless communication platform (ACP). The ACP is a technique for enabling secure data communication between the app server 4 and the app 21 while concealing (abstracting) differences in system configuration among the respective vehicles. For example, a combination of an ECU whose power supply is turned off in a parked state and an ECU whose power supply is not turned off in the parked state may be different for each vehicle Vc due to a difference in a model, a release year (generation), a grade, or the like. The configuration itself of the in-vehicle system including the ECUs may be different for each vehicle Vc. The relay server 5 plays a role of concealing, from the app server 4 side, a difference in system configuration for each vehicle and a difference in power supply state for each ECU, that is, diversity for each vehicle Vc and each ECU 2. Then, a pseudo constant connection is realized as if each ECU 2 and the app server 4 are always connected. The relay server 5 is a server constituting the ACP in one aspect, and thus can also be referred to as an ACP server.

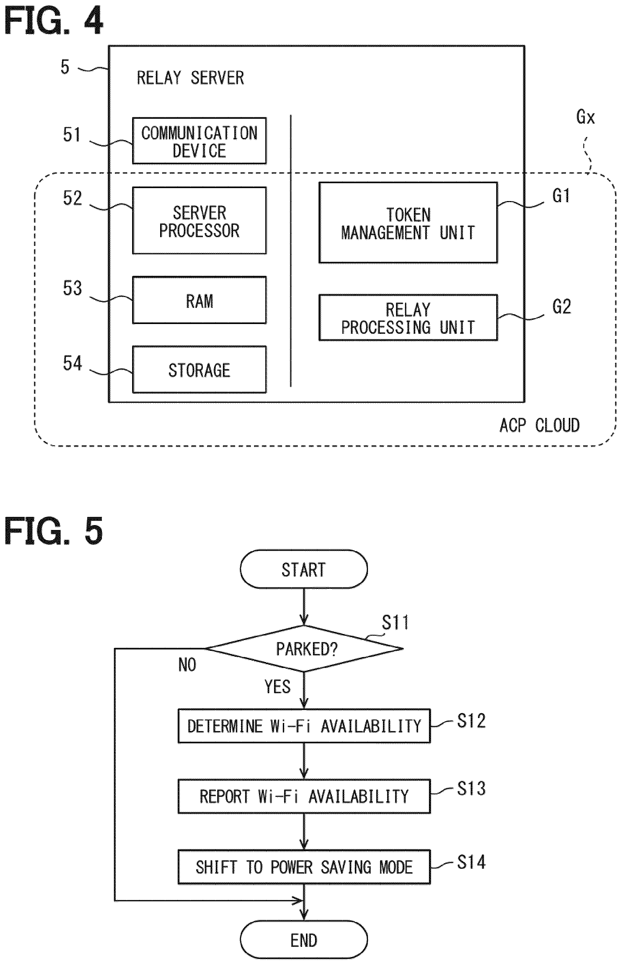

As illustrated in FIG. 4, the relay server 5 includes a communication device 51, a server processor 52, a RAM 53, and a storage 54. The communication device 51 is configured to execute communication with the in-vehicle communication device 1 and various app servers 4, and is configured to execute encrypted communication using, for example, TLS with other devices such as the app servers 4. The server processor 52 is, for example, an arithmetic core such as a CPU. The RAM 53 is a rewritable volatile memory. The storage 54 is a rewritable non-volatile memory. The storage 54 stores a relay server program, which is a program for relaying data communication between the in-vehicle communication device 1 and the app server 4. The relay server program may also be referred to as ACP cloud software.

The relay server 5 exchanges control signals with the in-vehicle communication device 1 and the app server 4, thereby acquiring communication route information (so-called 5-tuple) such as address information and port numbers of various devices. The address information is one or both of an IP address and a media access control (MAC) address. The relay server 5 notifies the app server 4 of information necessary for the app 21 and the app server 4 to communicate with each other, such as a port number assigned to the app 21 in the in-vehicle communication device 1.

In addition, the relay server 5 includes, for example, a token management unit G1 and a relay processing unit G2 as functional modules implemented by the server processor 52 executing the relay server program stored in the storage 54. The token management unit G1 and the relay processing unit G2 each correspond to a subsystem of an ACP cloud Gx which is a cloud-side functional unit constituting the ACP.

The token management unit G1 manages the app ID, the ECU-ID, and the communication device ID in association with a token as unique identification information (ID) for each combination thereof. The token is an ID for identifying a certain app 21 on a certain ECU 2, and plays a role of linking the app 21, the ECU 2, and the in-vehicle communication device 1. Even if the same app 21 is installed in multiple vehicles Vc and the app IDs thereof are the same, the app server 4 and the relay server 5 can set the app 21 installed in the certain ECU 2 of the specific vehicle Vc as the notification destination by using the token. Further, the app server 4 and the relay server 5 can uniquely specify the transmission source of the received message/data by using the token. The token has a predetermined number of bits, for example 16 bits.

The token management unit G1 issues a token when a predetermined token issuance event occurs. The token issuance event may include, for example, a case where the app 21 is newly installed in the ECU 2, and a case where the user of the vehicle Vc provided for the sharing service is changed. The issuance of the token, in other words, the payout of the token can be executed based on a request from the app 21, the ACP client 22, or the in-vehicle communication device 1.

When the token management unit G1 issues the token, the token management unit G1 notifies the related in-vehicle communication device 1 or the app server 4 of the token. The relay server 5 serving as the token management unit G1 communicates with each app server 4 to synchronize information of tokens related to the app servers 4. A token associated with a certain app server 4 means a token associated with the app ID corresponding to the app server 4. The relay server 5 serving as the token management unit G1 communicates with the in-vehicle communication device 1 to synchronize the information of the token related to the communication device ID of the in-vehicle communication device 1. The token is stored in association with a port number assigned to the app 21 in the in-vehicle communication device 1.

When the relay processing unit G2 receives a push request from a certain app server 4, the relay processing unit G2 specifies the in-vehicle communication device 1 corresponding to the destination based on the token included in the push request, and transmits a message to the in-vehicle communication device 1. The in-vehicle communication device 1 secures a communication route from the app 21 to the app server 4 based on the message transferred from the relay server 5, and starts data communication between the app 21 and the app server 4. The final destination of the push request is the app 21 or the ECU 2. For the relay server 5, the in-vehicle communication device 1 corresponds to an (intermediate) destination as a transfer destination. The transfer destination may be specified using the app ID, the port number, a destination IP address, a destination MAC address, or the like.

When the relay processing unit G2 receives the push request but the in-vehicle communication device 1 corresponding to the app 21 serving as the destination is not connected to the wide area communication network 9, the relay processing unit G2 returns a message to the request source indicating that the push distribution has failed. When the in-vehicle communication device 1 serving as the destination can be expected to connect to the wide area communication network 9 within a predetermined time based on Wi-Fi availability information to be separately described later, the relay processing unit G2 may suspend the push distribution and return a message to the app server 4 indicating the suspension of the push distribution.

In addition, the relay server 5 may have a function of authenticating a communication partner, such as the app server 4, the in-vehicle communication device 1, or the app 21, using an electronic certificate. Each app server 4 may have a part or all of functions provided by the relay server 5. The functional arrangement can be appropriately changed.

### <Example of App 21 and App Server 4>

Various apps 21 such as a vehicle state confirmation app, a video app, an emergency notification app, a probe app, and a control support app may be installed in the vehicle Vc. The vehicle state confirmation app is an app for confirming a vehicle state in an external device such as a smartphone. The vehicle state includes a total travel distance, a remaining battery level, a remaining fuel level, an open/closed state of each door, an open/closed state of each window, and an indoor temperature. The vehicle state may include a lighting state of a hazard lamp and a lighting state of an interior lamp. The open/closed state of the door includes a locked state.

The vehicle state confirmation app uploads, for example, various kinds of information to the corresponding app server 4, and the various kinds of information have been acquired at the timing of tuning off of the power source for vehicle traveling. The vehicle state confirmation app may have a function of controlling the locked/unlocked state of the door, the opening degree of the window, and the lighting state of the lighting device based on an instruction signal from the user transmitted via the app server 4. The vehicle state confirmation app may be configured as an app for remotely controlling a body-system electrical equipment or an in-vehicle air conditioner of the vehicle Vc. The body-system electrical equipment includes various lighting devices, a door lock motor, and a window motor. Communication for remotely locking the door corresponds to communication with relatively high urgency, whereas communication for remotely activating the air conditioner corresponds to communication with relatively low urgency. Even in the communication of the same app 21, the urgency, in other words, the immediacy of the communication may differ depending on the content or the purpose of the communication.

The video app is, for example, an app for streaming playback of a video stored in the cloud. The video app may be an app that transfers data such as a video recorded by an in-vehicle television system to a predetermined device such as a smartphone in cooperation with the app server 4. Communication for transferring recorded data corresponds to an example of communication with a large data size and low urgency. The emergency notification app is an app for making contact with a predetermined center or a smartphone held by a user in response to a trigger such as an accident or an abnormality of an occupant. The emergency notification app may be an app that detects an abnormality related to theft such as unauthorized unlocking of the vehicle Vc and notifies the center or the like of the abnormality. The emergency notification app corresponds to an example of an app 21 having a relatively high requirement for immediacy of communication.

The probe app is an app that uploads probe data such as a road shape recognized by an in-vehicle camera or the like to a server. The app server corresponding to the probe app may be a server that updates the map data by statistically integrating probe data uploaded from multiple vehicles Vc, for example, and transmits the updated map data to the vehicles Vc or a server for map distribution. The probe app corresponds to an example of an app having a large data size and low urgency.

The control support app is an app that receives dynamic map information (i.e., control support information) from the app server 4 periodically or when a predetermined event occurs. The dynamic map information serves as a reference for creating a control plan. The control support information may be, for example, information on a quasi-dynamic map element indicating a position and a type of an obstacle in traveling, such as a road section in which traffic regulation is performed, a tail position of a traffic congestion, a position of an on-road dropped object, and the like. The control support information may be information indicating a position and a lighting state of a traffic light present in front of the vehicle Vc, and information indicating a traveling trajectory according to a traveling direction inside or outside an intersection. The event that requests the control support information can be, for example, that a remaining time/distance to an intersection or a confluent branch point is less than a predetermined value. The app server 4 corresponding to the control support app can distribute the control support information according to the current position of the vehicle Vc in which the app 21 is installed, for example, based on a request from the app 21.

The app 21 described above is an example, and various apps other than those described above can be assumed. Further, multiple ECUs 2 may be configured to execute one app 21 in cooperation with each other.

### <Configuration of In-Vehicle Communication Device 1>

The in-vehicle communication device 1 executes data communication with the app server 4 corresponding to the app 21 included in the ECU 2 by using a cellular communication function or a Wi-Fi communication function based on a request from the app 21 or the app server 4. As described above, communication between the in-vehicle communication device 1 and the app server 4 is executed via the relay server 5, the wide area communication network 9, and the cellular base station 7 or the Wi-Fi base station 8.

The in-vehicle communication device 1 can selectively use the cellular line and the Wi-Fi line according to the status of communication traffic in each ECU 2. That is, the in-vehicle communication device 1 selectively uses various communication lines based on communication purposes and a communication status. A concept of the communication line/communication route available for the in-vehicle communication device 1 includes not only the cellular line but also the Wi-Fi line.

As illustrated in FIG. 2, the in-vehicle communication device 1 includes an in-vehicle communication unit 11, a cellular communication unit 12, a Wi-Fi communication unit 13, and a controller 14.

The in-vehicle communication unit 11 receives transmission data outputted by each ECU 2, and outputs the transmission data to the controller 14. The in-vehicle communication unit 11 outputs data inputted from the controller 14 to the ECU 2 designated as a destination. For example, the in-vehicle communication unit 11 acquires original data by separating multiplexed data inputted from each ECU2 by a predetermined method. The in-vehicle communication unit 11 is a circuit module for communicating with the ECU 2 via the in-vehicle network. The in-vehicle communication unit 11 is realized using an analog circuit element, an IC, or a PHY chip conforming to a communication standard of the in-vehicle network, for example.

The cellular communication unit 12 is a communication module that is in charge of a data link layer and a physical layer in a wireless communication protocol such as LTE. The cellular communication unit 12 includes an antenna capable of transmitting and receiving radio waves in a frequency band used in the LTE. The cellular communication unit 12 includes a transceiver that executes signal processing corresponding to conversion from a baseband signal to a high-frequency signal and inverse conversion thereof in accordance with an LTE communication standard, and a packet processing unit that executes conversion between an IP packet and a physical channel signal.

The cellular communication unit 12 establishes a communication connection to the cellular base station 7 based on a predetermined signaling procedure. The cellular communication unit 12 wirelessly connects to the cellular base station 7 based on a control signal from the cellular base station 7, such as a cell-specific RS (CRS). The cellular communication unit 12 executes so-called handover, in which the cellular base station 7 (i.e., serving cell) to be wirelessly connected is switched, according to the movement of the subject vehicle. The controller 14 may have a function of switching (reselecting) the serving cell.

The cellular communication unit 12 continues to operate using electric power of a battery even when the traveling power supply of the vehicle Vc is in the OFF state, for example, in the parked state of the vehicle Vc. Specifically, a control signal for communication confirmation is periodically exchanged with the cellular base station 7 using the electric power stored in the battery for maintaining the connection. Accordingly, the in-vehicle communication device 1 can maintain an online state in which the in-vehicle communication device 1 is connected to the wide area communication network 9 when the in-vehicle communication device 1 is present within the communication range of the cellular base station 7.

The Wi-Fi communication unit 13 is a communication module for connecting to the Internet via the Wi-Fi base station 8 and communicating with the app server 4. The Wi-Fi communication unit 13 corresponds to a short-range communication unit. The Wi-Fi communication unit 13 includes an antenna that transmits and receives radio waves in a frequency band used in a Wi-Fi standard such as a 2.4 GHz band or a 5 GHz band, a modulation circuit, and a demodulation circuit. The Wi-Fi communication unit 13 emits a wireless signal corresponding to data input from the controller 14. Further, the Wi-Fi communication unit 13 outputs data corresponding to a reception signal received by the antenna to the controller 14.

The Wi-Fi communication unit 13 recognizes the presence of the Wi-Fi base station 8 by receiving a beacon transmitted from the Wi-Fi base station 8. Communication connection between the Wi-Fi communication unit 13 and the Wi-Fi base station 8 is controlled by the controller14. The Wi-Fi communication unit 13 is not necessarily incorporated in the in-vehicle communication device 1. The Wi-Fi communication unit 13 may be provided outside the in-vehicle communication device 1 in such a manner that the in-vehicle communication device 1 can control an operation state of the Wi-Fi communication unit 13. An operation state of the Wi-Fi communication unit 13, for example, a power supply state is controlled by the controller 14.

The controller 14 mainly includes a computer, and the computer includes a processor 15, a RAM 16, a storage 17, and a bus connecting these components. The processor 15 is hardware for arithmetic processing combined with the RAM 16. The processor 15 includes at least one arithmetic core such as a CPU. The processor 15 executes various processes by accessing the RAM 16.

The storage 17 includes a nonvolatile storage medium such as a flash memory. The storage 17 stores a communication control program, which serves as a program executed by the processor 15. Execution of the above program by the processor 15 corresponds to execution of a communication control method, which is a method corresponding to the communication control program. Information (e.g., profile) on the APN (i.e., Access Point Name) available for the in-vehicle communication device 1 is registered in the storage 17. Further, in the storage 17, an SSID (i.e., Service Set Identifier) of Wi-Fi available for the in-vehicle communication device 1, an encryption key, and the like are registered.

The controller 14 includes, as functional blocks, a cellular control unit F1, a Wi-Fi control unit F2, a parking detection unit F3, a Wi-Fi availability determination unit F4, a Wi-Fi availability report unit F5, a relay processing unit F6, and an activation instruction unit F7. The relay processing unit F6 includes a request receiving unit F61, a route allocation unit F62, and an ID management unit F63 as sub-functions. Each of the functional units included in the controller 14 corresponds to a subsystem of an ACP engine Fx, which is a vehicle-side functional unit constituting the ACP.

The cellular control unit F1 controls the operation of the cellular communication unit 12. The cellular control unit F1 basically constantly drives the cellular communication unit 12. A case where the cellular communication unit 12 is stopped is assumed to be, for example, a case where it is detected that a user operation for stopping the cellular communication is performed, a case where the remaining battery charge falls below a predetermined limit value, or the like.

The cellular control unit F1 executes a procedure for establishing a cellular line in response to occurrence of a predetermined connection event. Examples of the connection event include a case where software of the controller 14 itself is updated, a case where the in-vehicle communication device 1 is restarted due to a malfunction, and a case where a cellular communication function is enabled by a user or a staff member of a maintenance shop or the like. The procedure for establishing the communication connection includes transmission of an attach request, transmission of APN information, and the like.

The Wi-Fi control unit F2 controls the operation of the Wi-Fi communication unit 13. The Wi-Fi control unit F2 corresponds to a short-range communication control unit. The controller 14 starts communication connection with the Wi-Fi base station 8 based on the Wi-Fi communication unit 13 receiving the beacon. That is, the Wi-Fi control unit F2 exchanges control signals with the Wi-Fi base station 8 for acquisition of an IP address and security settings (e.g., exchange of encryption keys). As will be described later, the Wi-Fi control unit F2 cuts off the power supply to the Wi-Fi communication unit 13 based on the parking detection unit F3 detecting that the subject vehicle is parked. That is, the Wi-Fi communication unit 13 is switched to an OFF state. The OFF state corresponds to a state in which the operation of the Wi-Fi communication unit 13 is stopped. Accordingly, even if the subject vehicle is within the communication range of the Wi-Fi base station 8 and the Wi-Fi connection is possible, the Wi-Fi connection is temporarily disconnected. Here, the Wi-Fi connection corresponds to connection to the wide area communication network 9 using the Wi-Fi communication.

When a predetermined Wi-Fi activation condition is satisfied, the Wi-Fi control unit F2 switches the power supply to the Wi-Fi communication unit 13 from the OFF state to the ON state. The Wi-Fi activation condition includes a normal activation condition and a parked activation condition. The normal activation condition may be, for example, that the vehicle-traveling power source is turned on. The parked activation condition may be receiving of a communication start request from the app 21 or the app server 4 in a state where the vehicle is parked and a Wi-Fi connection flag to be described later is set to ON. Since the Wi-Fi connection is basically set to OFF during the parked state, the communication start request from the app server 4 is received via the cellular line.

The parking detection unit F3 detects that the subject vehicle is parked based on the signal input from the in-vehicle sensor 3. Detecting that the subject vehicle is parked corresponds to determining that the subject vehicle is parked. For example, when the vehicle-traveling power source is set to OFF, the parking detection unit F3 determines that the subject vehicle is parked. The parking detection unit F3 may determine that the subject vehicle is parked based on the shift position being set to the parking position. The parking detection unit F3 may determine that the subject vehicle is parked when the shift position is set to the parking position and the parking brake is set to ON. The condition for determining that the subject vehicle is parked can be changed as appropriate.

The Wi-Fi availability determination unit F4 determines whether the connection to the wide area communication network 9 is available using the Wi-Fi communication at a parking point in cooperation with the Wi-Fi communication unit 13 based on the parking detection unit F3 detecting that the subject vehicle is parked. The Wi-Fi availability determination unit F4 corresponds to a short-range communication availability determination unit.

For example, the Wi-Fi availability determination unit F4 transmits a predetermined confirmation message to the relay server 5 using the Wi-Fi communication, based on the parking detection unit F3 detecting that the subject vehicle is parked. Then, in a case where a predetermined response message has been received from the relay server 5, the Wi-Fi availability determination unit F4 determines that the Wi-Fi connection is available. When the message transmission to the relay server 5 fails or when the response message from the relay server 5 is not received even after a predetermined response waiting time elapses, the Wi-Fi availability determination unit F4 determines that the Wi-Fi connection is unavailable. The determination result of the Wi-Fi availability determination unit F4 is held using, for example, the Wi-Fi connection flag which is a flag during processing. A state in which the Wi-Fi connection flag is ON (i.e., 1) corresponds to a state in which the Wi-Fi connection is available. A state in which the Wi-Fi connection flag is off (i.e., 0) corresponds to a state in which the Wi-Fi connection is not available. The determination result of the Wi-Fi availability determination unit F4 indicates whether the parking point at which the subject vehicle is parked is a Wi-Fi connectable point.

The determination result of the Wi-Fi availability determination unit F4, that is, the Wi-Fi connection flag is stored in the RAM16 or the storage 17. The Wi-Fi connection flag may be stored in a storage medium in which data is held even when the power supply for vehicle traveling is turned off. The Wi-Fi availability determination unit F4 may determine the availability of the Wi-Fi connection by attempting to communicate with a predetermined app server 4 via Wi-Fi without using the relay server 5.

The Wi-Fi availability determination unit F4 of the present embodiment not only checks whether a beacon is received from the Wi-Fi base station 8 but also checks whether data communication with an external device such as the relay server 5 is possible, in other words, whether connection to the wide area communication network 9 is available. According to this configuration, erroneously determining that the the Wi-Fi connection is available can be reduced, for example, when the Wi-Fi connection is actually not available due to a connection failure between the Wi-Fi base station 8 and the wide area communication network 9.

The Wi-Fi availability report unit F5 reports Wi-Fi availability information indicating the determination result of the Wi-Fi availability determination unit F4 to the relay server 5. The reporting of the Wi-Fi availability information by the Wi-Fi availability report unit F5 may be performed via the Wi-Fi communication or may be performed via the cellular line. Based on the report from the in-vehicle communication device 1, the relay server 5 grasps that the vehicle using the in-vehicle communication device 1 is parked and whether the vehicle is in a Wi-Fi connectable environment. The relay server 5 may detect that the target vehicle has shifted to the parked state and is in the Wi-Fi connectable environment based on the relay server 5 receiving the message for confirming whether the Wi-Fi connection is available from the in-vehicle communication device 1. The Wi-Fi availability report unit F5 corresponds to a reporting unit.

The request receiving unit F61 is a module that receives a request for data communication from the inside and the outside of the vehicle. The communication start request from the inside of the vehicle corresponds to a communication start request from the ECU 2 or the app 21. The communication start request from the outside of the vehicle corresponds to a communication start request from the app server 4. Since the communication start request from the app server 4 reaches the in-vehicle communication device 1 via the relay server 5, the communication start request from the outside of the vehicle can be interpreted as the communication start request from the relay server 5.

For example, the request receiving unit F61 receives a communication start request between the app 21 and the corresponding app server 4 based on receiving of the communication start request from the app 21. When the request receiving unit F61 receives a notification from the relay server 5 indicating that there is data for the app 21 designated by the app server 4, the request receiving unit F61 receives the communication start request that is a request to start communication between the target app 21 and the app server 4.

When the request receiving unit F61 receives the communication start request from the app 21 or the app server 4, the route allocation unit F62 secures a source port for the app 21 and sets a communication route from the app 21 to the app server 4. The source port is assigned to each app 21. That is, one app ID is set for one port. Multiple source ports may be allocated to one app. The elements constituting the communication route can include the type of communication line such as the cellular line or the Wi-Fi line, an allocated frequency, and the type of communication protocol. The communication protocol includes a transmission control protocol (i.e., TCP), a user datagram protocol (i.e., UDP), and the like.

In response to the communication start request received by the request receiving unit F61, the route allocation unit F62 sets a communication route according to the traveling state of the subject vehicle, the availability of the Wi-Fi communication, and the characteristics of the app 21/data communication. For example, when the vehicle is parked and the Wi-Fi communication is available, the route allocation unit F62 preferentially allocates the Wi-Fi communication to the app 21 regardless of the type of the app 21. That is, when the Wi-Fi communication is unavailable while the vehicle is parked, the cellular communication is allocated as the communication method between the app 21 and the app server 4.

When the subject vehicle is traveling, the route allocation unit F62 allocates the cellular line with low latency to the app 21 that requires real-time performance or communication stability, for example. On the other hand, when the app 21 is expected to have a relatively large data size, such as probe data or software update data, the Wi-Fi communication is preferentially allocated to the app 21, or the start of communication is suspended.

The ID management unit F63 manages the installation locations of the apps 21, i.e., which ECU 2 hosts the app 21, based on the notification from each ACP client 22. The ID management unit F63 stores the app ID of each app 21, the ECU-ID, and the token in association with each other in a memory such as the RAM 16. The token for each app 21 is acquired by communication with the relay server 5. The ID management unit F63 also manages the port number assigned to each app 21 by the route allocation unit F62 in association with the app ID and the token. The ID management unit F63 notifies the relay server 5 of the port number for each app ID or each token together with the communication device ID and the ECU-ID.

When the setting of the communication route to the app server 4 is completed, the controller 14 serving as the relay processing unit F6 returns a communication permission response, which is a message indicating permission of communication, to the ACP client 22. The communication permission response includes at least a source port number. The communication permission response of the in-vehicle communication device 1 may include the source IP address, the destination IP address, the destination port number, and the protocol.

When the relay processing unit F6 receives the communication start request from the app server 4, the relay processing unit F6 specifies the ECU 2 to which the app 21 corresponding to the destination belongs based on the token managed by the ID management unit F63. Then, the relay processing unit F6 transmits the received data to the specified ECU 2 in cooperation with the in-vehicle communication unit 11. When the power of the ECU 2 corresponding to the communication partner of the app server 4 is in the OFF state, the relay processing unit F6 requests the activation instruction unit F7 to start the target ECU 2 and waits for the power of the ECU 2 to be in the ON state. When the power of the ECU 2 corresponding to the destination of the push information is in the OFF state, the activation instruction unit F7 outputs an activation request signal, which is a control signal for switching to the power ON state, to the ECU 2. The relay processing unit F6 transmits a message/data from the app server 4 to the ECU 2 whose power supply is in the ON state.

When the request receiving unit F61 receives the communication start request in a state where the subject vehicle is parked and the Wi-Fi connection flag is set to ON, the relay processing unit F6 requests the Wi-Fi control unit F2 to activate the Wi-Fi communication unit 13. The Wi-Fi control unit F2 determines that the parked activation condition is satisfied and activates the Wi-Fi communication unit 13. When the request receiving unit F61 receives a communication start request in a state where the subject vehicle is parked and the Wi-Fi connection flag is set to ON, the controller 14 establishes a Wi-Fi connection and then causes the app 21 to start data communication. In this case, the route allocation unit F62 selects the Wi-Fi communication as the communication route of the app 21.

### <Processing Flow at the Time of Parking>

Here, the operation of the in-vehicle communication device 1 in a scene in which the subject vehicle is being parked will be described with reference to a flowchart illustrated in FIG. 5. For convenience, a series of processes executed by the in-vehicle communication device 1 at the time of parking is referred to as parking-related processing. The flowchart illustrated in FIG. 5 can be repeatedly executed at a predetermined determination cycle while a predetermined execution condition is satisfied, for example, when the vehicle speed is equal to or less than a predetermined value (for example, the vehicle speed is zero) or when the power source for vehicle traveling is set to ON. The determination cycle may be 100 milliseconds, 200 milliseconds, or 1 second, for example. Here, as an example, the parking-related processing includes steps S11 to S14. The number of steps constituting the parking-related processing and the order of execution can be changed as appropriate.

In step S11, the parking detection unit F3 determines whether the subject vehicle is parked based on the information input from the in-vehicle sensor 3. For example, the subject vehicle is determined to be parked based on a fact that the power source for vehicle traveling is set to OFF. When the vehicle is determined not to be parked, a negative determination is made in step S11, and the present flow ends. When the vehicle is determined to be parked, an affirmative determination is made in step S11, and the process proceeds to step S12.

In step S12, the Wi-Fi availability determination unit F4 determines whether the Wi-Fi connection is available at the parking point, and the process proceeds to step S13. In step S13, the Wi-Fi availability report unit F5 transmits the determination result in step S12 to the relay server 5, and the process proceeds to step S14. In step S14, the in-vehicle communication device 1 shifts to a power saving mode. In the power saving mode, for example, the power supply to the Wi-Fi communication unit 13 can be cut off and the operation can be stopped. Such a power saving mode corresponds to a mode in which the in-vehicle communication unit 11, the cellular communication unit 12, and the controller 14 operate normally.

The power saving mode may be a mode in which some or all of the functions of the controller 14 are stopped in addition to the stop of the Wi-Fi communication unit 13. In the power saving mode, the controller 14 may be configured to return to a normal mode when the in-vehicle communication unit 11 or the cellular communication unit 12 receives a signal corresponding to the communication start request. For example, the power saving mode may be a state in which only the components related to the in-vehicle communication unit 11, the cellular communication unit 12, and the request receiving unit F61 are operating. The normal mode corresponds to a state other than the power saving mode, that is, a state in which the Wi-Fi communication unit 13 and other components are operating.

### <Processing Flow when the Vehicle Is Parked>

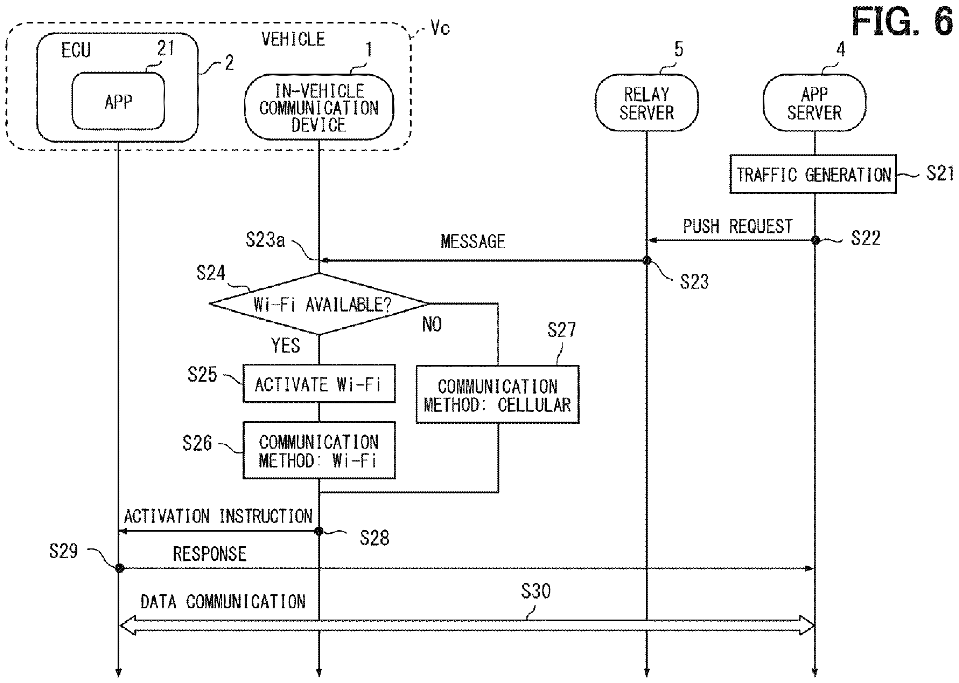

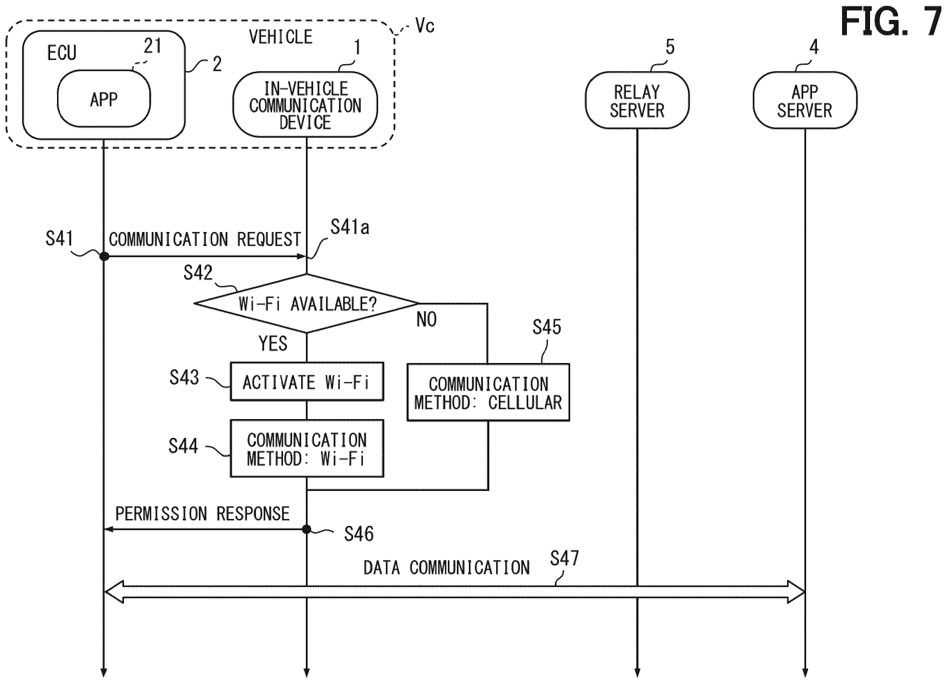

Next, the operation of each device when the communication start request is generated while the vehicle Vc is parked will be described with reference to the sequence diagrams illustrated in FIGS. 6 and 7. FIG. 6 is a sequence diagram when a communication demand is generated in the app server 4, in other words, when a push request is transmitted from the app server 4. FIG. 7 is a sequence diagram when a communication demand is generated in the ECU 2.

The ECU 2 and the app 21 illustrated in FIGS. 6 and 7 may be any ECU 2 and any app 21 among the ECUs 2 and the apps 21. The app server 4 illustrated in FIGS. 6 and 7 corresponds to the app 21 included in the ECU 2 illustrated in FIGS. 5 and 6. As a premise of the following description, the in-vehicle communication device 1 has established a communication connection with the relay server 5 using the cellular line. The relay server 5 and the app server 4 are also in a mutually communicable state, and execute communication for communication confirmation and data communication as needed.

First, with reference to FIG. 6, an interaction in a case where the communication demand is generated in the app server 4 will be described. When transmission data for the app 21 is generated in the app server 4 in a state in which the vehicle Vc is parked (step S21), the app server 4 transmits the push request as the communication start request to the relay server 5 (step S22). The push request includes a token corresponding to the destination app 21 in addition to the message body.

The app server 4 may notify the relay server 5 of communication condition information that is information used as a reference for communication control, such as an allowable waiting time and an expected data size. The communication condition information may be included in the push request or may be sent separately. The allowable waiting time is a parameter indicating an allowable length of time until the start of communication. The expected data size is a parameter indicating the size of data to be transmitted.

When the relay server 5 receives the push request from the app server 4, the relay server 5 specifies the in-vehicle communication device 1 and the app 21 to be the transmission destination of the message based on the token added to the message. Then, a message from the app server 4 is transmitted to the in-vehicle communication device 1 (step S23). At least one of the app ID and the token is also added to the message transmitted in this step.

When the in-vehicle communication device 1 receives the message from the relay server 5 via the cellular communication (step S23a), the in-vehicle communication device 1 refers to the setting value (ON/OFF) of the Wi-Fi connection flag and determines whether the Wi-Fi connection is available (step S24). When the Wi-Fi connection flag is set to ON (YES in step S24), the Wi-Fi control unit F2 activates the Wi-Fi communication unit 13 (step S25). Then, a control signal for acquiring an IP address or exchanging encryption keys is exchanged with the Wi-Fi base station 8, and the Wi-Fi base station 8 is connected to the wide area communication network 9 via the Wi-Fi communication.

When the Wi-Fi connection is completed, the route allocation unit F62 allocates the Wi-Fi communication as a communication line between the app 21 and the app server 4 (step S26). On the other hand, when the Wi-Fi connection flag is set to OFF (NO in step S24), the route allocation unit F62 allocates the cellular communication as the communication line between the app 21 and the app server 4 (step S27). The app 21 and the ECU 2 to be processed are specified based on the app ID or the token added to the message.

When preparation for communication such as the Wi-Fi connection is completed, the activation instruction unit F7 activates the ECU 2 and transmits a message from the app server 4 to the app 21 (step S28). The activation processing of the ECU 2 by the activation instruction unit F7 can be omitted when the ECU 2 is already powered on.

Upon receiving the message from the app server 4 via the ACP client 22, the app 21 returns a predetermined message to the app server 4 (step S29). The message transmitted in step S29 may be, for example, an initial message (so-called ClientHello) for starting TLS communication, or may be another predetermined message.

The app 21 and the app server 4 establish a session by exchanging messages in a predetermined data communication sequence such as a handshake protocol, and start encrypted communication (step S30). Through the above processing, data communication between the app server 4 and the app 21 is started. If the contents of the push request do not require bidirectional communication, step S30 can be omitted. Similarly, when the content of the push request is of a type that does not require the transmission of the response message, the processing of step S29 and subsequent steps can be omitted.

Next, an interaction in a case where a communication demand is generated in the ECU 2 (i.e., app 21) will be described with reference to FIG. 7. When the vehicle is parked, the app 21 can voluntarily output a communication start request based on a preset schedule to execute communication for software update, for example. In addition, the communication start request by the app 21 may also be generated when a predetermined notification event such as, detection of vibration equal to or greater than a predetermined threshold, breakage of a window, or unauthorized unlocking, is detected. The notification event may include leaving a child in the vehicle. The ECU 2 shifts from the OFF state to the ON state and activates the app 21 based on the detection of the preset schedule or the predetermined event. Of course, the ECU 2 described here may be an ECU 2 that maintains its ON state even when the vehicle is parked.

When transmission data to be transmitted to the app server 4 is generated in the app 21 in a state where the vehicle Vc is parked, the app 21 transmits the communication start request to the in-vehicle communication device 1 via the ACP client 22 (step S41). The communication start request includes at least the app ID or the token.

When the in-vehicle communication device 1 receives the communication start request from the ECU 2 (step S41a), the in-vehicle communication device 1 first secures a port for the app 21 as a communication request source. In a case where the port for the request source has been already secured, the securing of the port may be omitted. When the route allocation unit F62 allocates a new port to the app 21, the ID management unit F63 notifies the relay server 5 of the port number allocated to the target app 21 in association with at least one of the app ID and the token.

Next, the in-vehicle communication device 1 refers to the setting value of the Wi-Fi connection flag, and determines whether the Wi-Fi connection is available (step S42). When the Wi-Fi connection flag is set to ON (YES in step S42), the Wi-Fi control unit F2 activates the Wi-Fi communication unit 13 (step S43). In addition, routing processing is executed in accordance with a predetermined signaling procedure, and connection to the wide area communication network 9 is executed via the Wi-Fi communication. Then, the route allocation unit F62 allocates the Wi-Fi communication as a communication line between the app 21 and the app server 4 (step S44). On the other hand, when the Wi-Fi connection flag is set to OFF, the route allocation unit F62 allocates the cellular communication as the communication line between the app 21 and the app server 4 (step S45).

When preparation for the communication such as the Wi-Fi connection is completed, a communication permission response is transmitted to the app 21 (step S46). The communication permission response can include route information such as a source port number and an IP address.

Upon acquiring the communication permission response via the ACP client 22, the app 21 establishes a session by exchanging messages with the app server 4 in a predetermined data communication sequence, and starts encrypted communication with the app server 4 (step S47). Through the above processing, data transmission and the like from the app 21 to the app server 4 are executed.

### <Problems to be Solved by the Configuration and Effects of the Configuration>

Patent Literature 1 does not describe a method of controlling a communication line in an in-vehicle communication device when a power source for vehicle traveling is turned off after parking is completed.

In recent years, there has been an increasing demand for maintaining an in-vehicle communication device in a communicable state for data distribution to a vehicle, acquisition of vehicle data, remote control, and the like even in a state where a power source for vehicle traveling is set to OFF, such as a state where a vehicle is parked.

In the in-vehicle communication device capable of using both cellular communication and Wi-Fi communication, power consumption of a battery is large when both communication modules are activated also when the vehicle is parked. In general, a Wi-Fi communication module consumes more power than a cellular communication module. Under such circumstances, the developers of the present disclosure have studied a configuration in which an operation of the cellular communication module is continued and an operation of the Wi-Fi communication module is stopped while the vehicle is parked.

Then, the developers of the present disclosure have studied the above configuration and found the following problem. In the above-described studied configuration, only cellular communication can be used when the vehicle is parked. Therefore, when a communication demand such as software distribution is generated while the vehicle is parked, the data communication is executed via the cellular communication. As a result, the communication fee may increase.

The present disclosure is achieved based on the above studies and viewpoints, and an object of the present disclosure is to provide a communication device, a communication processing system, and a communication control method capable of reducing a cellular communication amount while reducing power consumption when a vehicle is parked.

According to the above configuration of the present disclosure, since the power supply to the Wi-Fi communication unit 13 is stopped when the vehicle is parked, power consumption (dark current) can be reduced when the vehicle is parked. Further, the availability of the Wi-Fi connection at the parking point is stored, and when the Wi-Fi connection is available, the Wi-Fi communication unit 13 is activated on the basis of a communication start request from the inside or the outside of the vehicle. Then, the Wi-Fi communication is allocated as a communication path between the app 21 and the app server 4. That is, before the data communication between the app 21 and the app server 4 is started, the Wi-Fi connection is established, thereby causing the communication to be executed via Wi-Fi. According to this configuration, an amount of communication via the cellular line can be reduced when the vehicle is parked. That is, it is possible to achieve both reduction in cellular communication traffic and reduction in power consumption.

In a case where it is registered that Wi-Fi connection is not available at the parking point, data communication between the app 21 and the app server 4 is executed via cellular without activating the Wi-Fi communication unit 13. According to this configuration, it is possible to quickly start data communication without unnecessarily activating the Wi-Fi communication unit 13.

Further, in the above configuration, as a more preferable embodiment, the relay server 5 also holds Wi-Fi availability information. According to this configuration, in response to the communication start request from the app server 4, the relay server 5 can return a response according to the availability of the Wi-Fi connection. For example, when the Wi-Fi connection is unavailable for the in-vehicle communication device 1 at the parking point, the relay server 5 may return a communication impossible response to the app server 4 serving as a request source in response to a request to start communication that is non-urgent and large-volume. The communication impossible response may be a message indicating that communication is not available at present or requesting to retry communication after a predetermined time.

The non-urgent communication is, for example, communication in which an allowable waiting time is set to 12 hours, 1 day, 1 week, or the like. For example, distribution of software update data of the app 21 that is not involved in the travel control of the vehicle, for example, an entertainment app 21 such as the video app, may correspond to the non-urgent communication. The importance of the software update of the app 21 related to the travel control of the vehicle may vary depending on the purpose of the software update. The allowable waiting time for the software distribution may be appropriately set by the software distributor.

According to the configuration in which the relay server 5 holds the communication state of the in-vehicle communication device 1 as in the above example, the relay server 5 can return a response corresponding to the communication state of the in-vehicle communication device 1 to the app server 4 without inquiring of the in-vehicle communication device 1. As a result, a risk of unnecessarily activating the in-vehicle communication device 1 can be reduced, and the power consumption can be further reduced when the vehicle is parked. When a communication condition such as the allowable waiting time is included in the communication start request transmitted by the app server 4, the relay server 5 can make a more appropriate response to the push request from the app server 4 according to the state of the in-vehicle communication device 1.

While the embodiment of the present disclosure has been described above, the present disclosure is not limited to the embodiment described above. Various modifications to be described below are also included in the technical scope of the present disclosure. Besides the modifications to be described below, the present disclosure can be implemented with various changes without departing from the gist of the present disclosure. For example, various supplements and/or modifications to be described below can be implemented in combination as appropriate within a scope that does not cause technical inconsistency. The members having the same functions as described above are assigned the same reference numerals, and the description of the same members will be omitted. Further, when only a part of the configuration is mentioned, the above description can be applied to the other parts.

### <Supplement of Operation When Vehicle is Parked>

The parking point may be a place where the cellular communication is not available, that is, outside the communication area of the cellular base station 7. In the above configuration, in a case where the Wi-Fi connection is available at the parking point but the parking point is out of the cellular communication area, the communication start request from the app server 4 cannot be delivered to the in-vehicle communication device 1. Therefore, when the cellular communication is out of service at the parking point and the Wi-Fi connection flag is set to ON, the controller 14 may intermittently activate the Wi-Fi communication unit 13 at a predetermined polling interval. The polling interval may be, for example, 5 minutes or 10 minutes. The polling interval may be set according to a responsiveness required by the service (application). The set value of the polling interval is registered in the relay server 5 in advance through communication with the in-vehicle communication device 1 or registered as a system design value.

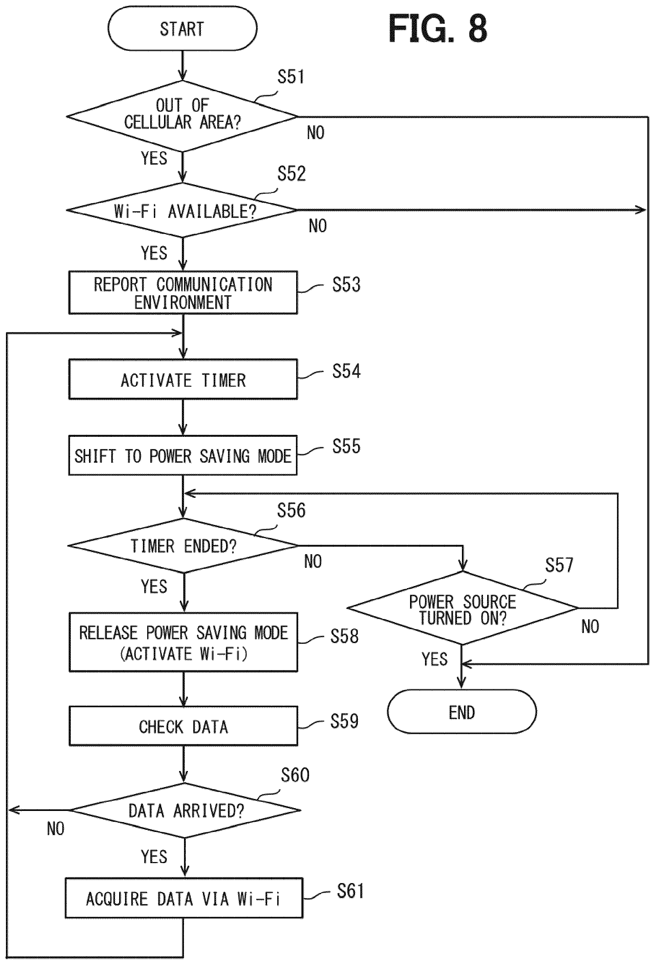

Hereinafter, an operation of the in-vehicle communication device 1 corresponding to the above technical idea will be described with reference to the flowchart shown in FIG. 8. The flowchart illustrated in FIG. 8 can be executed, for example, as a process subsequent to the parking-related processing illustrated in FIG. 5. The number of steps and the processing order of the flowchart illustrated in FIG. 8 can be changed as appropriate.

It is assumed that the relay server 5 is configured to hold a push request for a predetermined time corresponding to the polling interval when receiving the push request addressed to the in-vehicle communication device 1 in which the Wi-Fi connection flag is set to ON. The state of the relay server 5 holding the push request corresponds to a state in which retry of communication is repeated at regular intervals or a state in which a message can be transmitted based on an inquiry from the in-vehicle communication device 1.

First, in step S51, the cellular control unit F1 determines whether a wireless connection with the cellular base station 7 has been established based on a signal from the cellular base station 7. When the cellular communication is unavailable, that is, when the parking point is out of the cellular communication area, an affirmative determination is made in step S51, and the process proceeds to step S52. On the other hand, when the cellular communication is available, a negative determination is made in step S51, and this flow ends. The availability of the cellular communication may be managed by a cellular connection flag that is a flag for processing.

In step S52, it is determined whether the Wi-Fi connection flag is set to ON. When the Wi-Fi connection flag is set to ON, the process proceeds to step S53. On the other hand, when the Wi-Fi connection flag is set to OFF, this flow ends.

In step S53, the Wi-Fi availability report unit F5 reports a communication environment of the parking point to the relay server 5 via Wi-Fi. That is, the Wi-Fi availability report unit F5 transmits a notification indicating that the Wi-Fi connection is available but the cellular communication is unavailable. In a system configuration in which the polling interval is not constant and the relay server 5 may not know the polling interval set for the in-vehicle communication device 1, the Wi-Fi availability report unit F5 may notify the relay server 5 of the current set value of the polling interval. When step S53 is completed, an operation in step S54 is executed.

In step S54, a polling timer, which is a timer for activating the Wi-Fi communication unit 13 and establishing a network connection, is activated, and the process proceeds to step S55. The polling timer is configured to continue operating even in the power saving mode. In step S55, the in-vehicle communication device 1 shifts to the power saving mode.

In step S56, it is determined whether the polling timer has ended. For example, when a signal indicating that the polling timer has ended is not output from the polling timer, the process proceeds to step S57, and it is determined whether the power source for vehicle traveling has been turned on from off. Step S57 corresponds to a step of determining whether the parked state is released. When the power source for vehicle traveling remains off, the determinations of steps S56 and S57 are repeated. When the polling timer ends, step S58 is executed.

In step S58, the in-vehicle communication device 1 returns to the normal mode and executes processing related to the Wi-Fi connection. When the Wi-Fi connection is established, an operation of step S59 is executed. In step 59, the request receiving unit F61 communicates with the relay server 5 and checks whether a message (data) for the subject vehicle has arrived at the relay server 5 from the app server 4.

When the message addressed to the subject vehicle has not arrived at the relay server 5, a negative determination is made in step S60, and the processes in step S54 and subsequent steps are executed again. On the other hand, when the message addressed to the subject vehicle has arrived at the relay server 5, an affirmative determination is made in step S60, and an operation of step S61 is executed. In step S61, a message that has arrived at the relay server 5 is acquired via Wi-Fi, and a response corresponding to the message is made. For example, the app 21 communicates with the app server 4, receives distribution data from the app server 4, and transmits data in response to a request from the app server 4. When the series of communication processes in step S61 are completed, the processes in and after step S54 are executed again.

As described above, according to the configuration in which the Wi-Fi communication unit 13 is periodically activated and checks the presence or absence of the communication start request from the app server 4 in the relay server 5 via Wi-Fi, a certain level of serviceability can be achieved even outside the cellular service area while reducing battery consumption.

The polling interval may be dynamically changed according to an elapsed time from parking or a time zone. For example, immediately after the vehicle is parked, there is a relatively high possibility that the user may forget to lock a door, forget to close a window, or the like and may want to remotely operate the vehicle. Therefore, the polling interval may be made shorter when the elapsed time from the parking is less than a predetermined waiting time than when the elapsed time from the parking is equal to or more than the waiting time. For example, when the elapsed time from the parking is equal to or longer than the waiting time, the polling interval is set to a relatively long value such as 5 minutes or 10 minutes. On the other hand, when the elapsed time from the parking is less than the waiting time, the polling interval may be set to a value, such as 2 minutes, equal to or less than half the value applied when the elapsed time from the parking is equal to or more than the waiting time. The waiting time is, for example, 15 minutes or 30 minutes, and may be configured to be settable by the user.

The in-vehicle communication device 1 may specify a turn-on time at which the power source for vehicle traveling is likely to be set to ON based on the history of the user's daily use start time of the subject vehicle, and set the polling interval to be shorter in time periods within the waiting time before and after the turn-on time than other time periods. The in-vehicle communication device 1 may be configured such that the polling interval is shorter in a time period designated in advance by the user than in other time periods. The in-vehicle communication device 1 may be configured to set the polling interval for each time period based on a user operation.

According to the above-described configuration, the communication between the app server 4 and the app 21 is possible even outside the cellular service area. However, from the viewpoint of the app server 4, the immediacy in communication from the push request to the start of data communication may deteriorate. Therefore, when the in-vehicle communication device 1 is located outside the cellular service area and the Wi-Fi connection is available, the relay server 5 may notify the app server 4, which is the push request source, that immediate communication is not possible. The notification that the immediate communication is not possible may be transmission of any one of (i) a waiting instruction, (ii) a waiting time until the start of data communication, and (iii) a message indicating that the communication cannot be performed. More specifically, the content of the notification as the waiting time until the start of data communication may be a set value of the polling interval, or may be a time at which the next data communication becomes possible or a remaining time until the time.

According to the above-described configuration, the relay server 5 notifies the app server 4 that the in-vehicle communication device 1 cannot start the immediate communication because the in-vehicle communication device 1 is out of the cellular service area, the app server 4 can execute processing according to the characteristics of the provided service. For example, the app server 4 can execute an alternative response such as transmitting a predetermined message to a smartphone or the like possessed by a user. More specifically, it is possible to display a waiting time on a screen of the smartphone or the like possessed by the user, and to display an option for selecting whether to wait or stop a response from the vehicle.

The app server 4 may transmit, to the relay server 5, the push request as data including attribute information indicating whether the message is a message requiring immediacy, such as an allowable waiting time. The relay server 5 may be configured to execute different processing based on a result of comparison between the requested immediacy and the polling interval when receiving a push request addressed to the in-vehicle communication device 1 in which the Wi-Fi connection flag is set to ON. For example, when the set value of the polling interval exceeds the allowable waiting time, the push request is rejected and a communication impossible response is returned to the push request source. On the other hand, when the set value of the polling interval is equal to or less than the allowable waiting time, the push request is held as described above. When the set value of the polling interval is equal to or less than the allowable waiting time, the relay server 5 may notify the push request source of the polling interval or the remaining time until communication with the in-vehicle communication device 1/ECU 2/app 21 serving as the destination becomes possible next time.

Although the relay server 5 specifies the communication environment at the parking point of the in-vehicle communication device 1 based on the report of the in-vehicle communication device 1 in the above-described configuration, the method of specifying the communication environment at the parking point of the in-vehicle communication device 1 is not limited thereto. The relay server 5 and the in-vehicle communication device 1 may be configured to periodically transmit and receive messages for communication confirmation. The relay server 5 can determine that the in-vehicle communication device 1 is in an environment in which neither the cellular communication nor the Wi-Fi connection are available, based on a fact that a state in which the communication confirmation cannot be obtained has continued for a time period corresponding to the polling interval or longer.

The relay server 5 may determine that the in-vehicle communication device 1 is in an environment in which the cellular communication is not available but the Wi-Fi connection is available, based on a fact that the data communication with the in-vehicle communication device 1 can be intermittently executed at a cycle corresponding to the polling interval.

When the relay server 5 receives a push request addressed to the ECU 2/app 21 associated with the in-vehicle communication device 1 that is determined to be in an environment in which neither the cellular communication nor the Wi-Fi connection is available, the relay server 5 may notify the request source that the destination is not communicable. When the relay server 5 receives a push request addressed to the ECU 2/app 21 associated with the in-vehicle communication device 1 for which the cellular communication is available and the Wi-Fi connection is unavailable, the relay server 5 may change the response according to the assumed data size provided from the app server 4. For example, when an expected data size is equal to or larger than a predetermined threshold (for example, 100MB), a message transfer to the in-vehicle communication device 1 may be suspended, and the app server 4 may be notified that the Wi-Fi connection is not available for the in-vehicle communication device 1. According to this configuration, the app server 4 can take measures such as displaying a screen on the terminal such as the smartphone possessed by the user for inquiring of the user whether to execute the large-capacity communication via the cellular line.

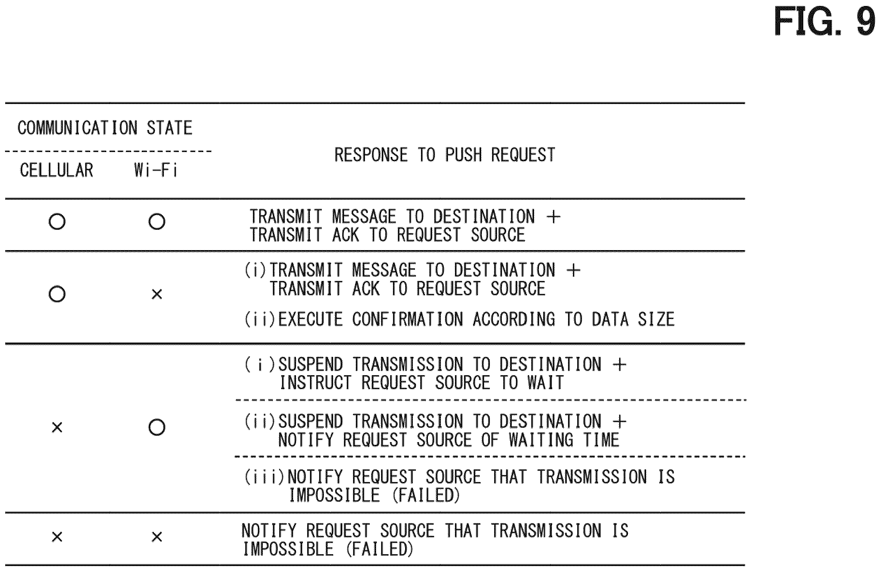

As described above, the relay server may change the response to the push request from the app server 4 according to the communication state of the in-vehicle communication device 1, in other words, the communication environment at the parking point. FIG. 9 is a table summarizing an example of the response policy according to the communication state of the in-vehicle communication device 1 described above. When the cellular communication is not available but the the Wi-Fi connection is available for the in-vehicle communication device 1, various responses can be adopted according to immediacy required as a service.

Although the embodiment in which the Wi-Fi communication is adopted as the narrow area communication has been described above as an example, the narrow area communication method may not be Wi-Fi. The short-range communication unit may be a module that executes communication conforming to the Bluetooth (registered trademark) standard. The short-range communication unit may be a communication module that executes impulse radio (IR) ultra wide band (UWB) communication. The short-range communication may conform to the DSRC (Dedicated Short Rang e Communications) corresponding to the IEEE802.11p standard or the WAVE (Wireless Access in Vehicular Environment) standard disclosed in IEEE1609, for example. In one aspect, the short-range communication may be communication capable of using a network connection via a wireless LAN/access point. The access point is a facility that forms a wireless LAN. The concept of the access point can include not only a router but also a roadside unit. On the other hand, the cellular communication unit 12 can be understood as a communication module capable of using communication via a mobile phone line or network connection using a SIM. In addition, the short-range communication may be cellular V2X, for example, C-V2X (LTE-V2X), NR-V2X (5G-V2X), or LTE Direct. The short-range communication unit may be included in the cellular communication unit as one functional element of the cellular communication unit. The in-vehicle communication device 1 may be wirelessly connected to the roadside device via the cellular V2X and communicate with the relay server 5 and the app server 4 via the roadside device. The V2X is an abbreviation for Vehicle to X (everything/something) and indicates a communication technology for directly connecting a vehicle to various things. The concept of V2X includes road-to-vehicle communication and vehicle-to-vehicle communication. NR is an abbreviation for New Radio.

### <Supplementary Note (1)>

The device, the system, and the method therefor which have been described in the present disclosure may be also realized by a dedicated computer which constitutes a processor programmed to execute one or more functions implemented by computer programs. The device and the method described in the present disclosure may be implemented using a dedicated hardware logic circuit. Furthermore, the device and the method thereof described in the present disclosure may be implemented by one or more dedicated computers including a combination of a processor that executes a computer program and one or more hardware logic circuits. For example, part or all of the functions of the in-vehicle communication device 1 may be implemented by hardware. A configuration in which a certain function is implemented by hardware includes a configuration in which the function is implemented by use of one or more ICs or the like. As the processor (arithmetic core), a CPU, an MPU, a GPU, a DFP (Data Flow Processor), or the like can be adopted. Further, a part or all of the functions of the in-vehicle communication device 1 may be implemented by a combination of multiple types of arithmetic processing devices. A part or all of the functions of the in-vehicle communication device 1 may be implemented using a system-on-chip (SoC), a field-programmable gate array (FPGA), or the like. Further, the computer program may be stored in a computer-readable non-transitionary tangible storage medium as an instruction executed by the computer. As a program storage medium, Hard-disk Drive (HDD), Solid State Drive (SSD), flash memory, and Secure Digital (SD) card can be adopted, for example.

## Claims

1. A communication device configured to be used for a vehicle as an interface for data communication between at least one in-vehicle device and an information processor present outside the vehicle, the communication device comprising:
a short-range communication control unit (F2) configured to control an operation of a short-range communication unit (13) that is configured to execute short-range communication;
a parking detection unit (F3) configured to detect that the vehicle is parked based on a signal from an in-vehicle sensor (3);
a short-range communication availability determination unit (F4) configured to determine whether the data communication using the short-range communication is available at a point where the parking detection unit detects that the vehicle is parked, and configured to store a determination result in a predetermined memory (16, 17); and
a request receiving unit (F61) configured to receive a communication start request from one of the in-vehicle device and the information processor, the communication start request being a message requesting start of the data communication with another of the in-vehicle device and the information processor, wherein
the short-range communication control unit is configured to stop the operation of the short-range communication unit based on the parking detection unit detecting that the vehicle is parked, and
the short-range communication control unit is configured to restart the operation of the short-range communication unit for the data communication between the in-vehicle device and the information processor using the short-range communication when the request receiving unit receives the communication start request in a state where the memory holds data indicating that the vehicle is parked and that the data communication using the short-range communication is available.

2. The communication device according to claim 1, wherein
the short-range communication availability determination unit is configured to determine whether the data communication using the short-range communication is available by actually transmitting and receiving a predetermined message to and from the information processor or another device on a network.

3. The communication device according to claim 1 or 2, further comprising
a cellular control unit (F1) configured to control an operation of a cellular communication unit (12) that is configured to execute cellular communication, wherein
the cellular control unit continues the operation of the cellular communication unit when the vehicle is parked, and
the request receiving unit is configured to receive the communication start request from the information processor through the cellular communication.

4. The communication device according to claim 3, wherein
the communication device is configured to communicate with the information processor via a relay server (5) configured to be capable of mutual communication with the information processor, and
the communication device is configured to transmit the determination result of the short-range communication availability determination unit to the relay server.

5. The communication device according to claim 4, wherein
the short-range communication control unit is configured to intermittently operate the short-range communication unit at a predetermined polling interval during a parked state of the vehicle when the cellular communication is unavailable at the point where the parking detection unit detects that the vehicle is parked.

6. A communication processing system comprising:
a communication device (1) configured to be used for a vehicle as an interface for data communication between an in-vehicle device (2) and an information processor present outside the vehicle; and
a relay server (5) configured to relay communication between the communication device and the information processor, wherein
the communication device includes
a short-range communication control unit (F2) configured to control an operation of a short-range communication unit (13) that is configured to execute short-range communication,
a cellular control unit (F1) configured to control an operation of a cellular communication unit (12) that is configured to execute cellular communication,
a parking detection unit (F3) configured to detect that the vehicle is parked based on a signal from an in-vehicle sensor (3),
a short-range communication availability determination unit (F4) configured to determine whether the data communication using the short-range communication is available at a point where the parking detection unit detects that the vehicle is parked, and configured to store a determination result in a predetermined memory (16, 17),
a request receiving unit (F61) configured to receive a communication start request from one of the in-vehicle device and the information processor, the communication start request being a message requesting start of the data communication with another of the in-vehicle device and the information processor, and
a reporting unit (F5) configured to transmit the determination result of the short-range communication availability determination unit to the relay server, wherein
the short-range communication control unit is configured to stop the operation of the short-range communication unit based on the parking detection unit detecting that the vehicle is parked and intermittently operate the short-range communication unit at a predetermined polling interval when the cellular communication is unavailable and the data communication using the short-range communication is available at the point where the parking detection unit detects that the vehicle is parked,
the relay server is configured to
determine whether the cellular communication is unavailable for the communication device and whether the data communication using the short-range communication is available for the communication device on the basis of at least one of a report from the communication device and a result of communication confirmation with the communication device, and
change a response to the communication start request transmitted from the information processor based on a combination of whether the cellular communication is available for the communication device and whether the data communication using the short-range communication is available for the communication device.

7. The communication processing system according to claim 6, wherein
the relay server is configured to hold the communication start request for a time corresponding to the polling interval and transmit the communication start request to the communication device based on receiving an inquiry from the communication device when the relay server receives the communication start request associated with the communication device from the information processor in a state where the cellular communication is unavailable for the communication device and the data communication using the short-range communication is available for the communication device.

8. The communication processing system according to claim 6 or 7, wherein
the relay server is configured to return a message indicating that communication cannot be immediately started to a transmission source of the communication start request when the relay server receives the communication start request associated with the communication device from the information processor in a state where the cellular communication is unavailable for the communication device and the data communication using the short-range communication is available for the communication device.

9. The communication processing system according to any one of claims 6 to 8, wherein
the relay server is configured to
determine that the communication device is in an environment in which neither the cellular communication nor the data communication using the short-range communication is available based on a fact that a state in which communication with the communication device is impossible has continued for a time period corresponding to the polling interval or longer, and
return a message indicating that communication cannot be started to a transmission source of the communication start request when the relay server receives the communication start request from the information processor, the communication start request being associated with the communication device that is in the environment in which neither the cellular communication nor the data communication using the short-range communication are available.

10. A communication control method for executing data communication between at least one in-vehicle device and an information processor present outside a vehicle, the method comprising:
a step (S11) of detecting that the vehicle on which the in-vehicle device is mounted is parked based on a signal from an in-vehicle sensor;
a step (S12) of determining whether the data communication using short-range communication is available at a point where the vehicle is parked, and storing a determination result in a predetermined memory (16, 17) based on detection of the vehicle being parked;
a step (S23a, S41a) of receiving a communication start request from one of the in-vehicle device and the information processor, the communication start request being a message requesting start of the data communication with another of the in-vehicle device and the information processor;
a step (S14) of stopping an operation of a short-range communication unit (13) based on detection of the vehicle being parked, the short-range communication unit being a communication module configured to execute the short-range communication; and
a step (S25, S26, S43, S44) of restarting the operation of the short-range communication unit for the data communication between the in-vehicle device and the information processor using the short-range communication based on receiving of the communication start request in a state where the memory holds data indicating that the vehicle is parked and that the data communication using the short-range communication is available.
